# EUROPEAN PATENT SPECIFICATION

(11) **EP 0 669 077 B1**
(45) Date of publication and mention of the grant of the patent: **19.07.2000**
(21) Application number: 95301161.6
(22) Date of filing: 22.02.1995
(51) Int. Cl.: A01M 1/22

(54) **Insect killing device**
Insektentötendes Gerät
Dispositif d'extermination des insects

(30) Priority: 28.02.1994 GB 9403781
(43) Date of publication of application: 30.08.1995
(73) Proprietor: Pest West Electronics Ltd., Ossett, West Yorkshire WF5 9NB (GB)
(72) Inventor: Greening, John Llewellyn, Kinlet, Nr Bewdley, Worcesters. DY12 3DW (GB)
(74) Representative: Belcher, Simon James

(56) References cited:
- WO-A-87/04901
- US-A- 4 366 644
- US-A- 4 422 015
- US-A- 4 709 502
- US-A- 4 807 390
- US-A- 5 272 831

## Description

The present invention relates to an insect killing device.

Insect killing devices are commonly used in environments where the presence of insects is undesirable, for example in locations where food is prepared.

Known insect killing devices comprise means for attracting insects to the device, a metal grid, and a high voltage source connected to the grid. Insects attracted to the device are killed when they contact the grid. US-A-5 272 831 concerns such a device.

Insect killing devices of this kind must function reliably. Frequently, they are located in inaccessible positions. It can be easy to see whether the device overall is connected to a power supply when the means for attracting insects to the device comprises an ultraviolet light source, as for example in US-A-5 272 831. However, it can be difficult to determine whether the metal grid is connected reliably to the high voltage source.

The high voltage source commonly comprises a transformer of which the primary winding is for connection to a power supply and the secondary winding is connected to the metal grid. The formation of a reliable connection between the transformer and the metal grid can be indicated by means of an appropriate signalling means that is connected to the secondary winding of the transformer. This has several disadvantages. In particular, the power consumed by the signalling means and associated resistors can be undesirably high. Furthermore, the connection of the signalling means, through associated resistors and other components, to a high voltage source can in itself give rise to problems of low reliability.

US-A-4 366 644 discloses an apparatus for killing pests as termites by electroshock. The primary and secondary windings of the transformer are together magnetically coupled to a visual power-output monitor.

The present invention provides an insect killing device in which the transformer includes an auxiliary winding that is coupled magnetically with only the secondary winding of the transformer, the transformer core comprising first and second magnetic circuits.

The invention provides an insect killing device according to claim 1, said device comprising :
(a) means for attracting insects to the device;
(b) a metal grid;
(c) a high voltage source comprising a transformer of which a primary winding is for connection to a power supply and a secondary winding is connected to the metal grid, the transformer core comprising a first magnetic circuit which includes the primary and secondary windings
(d) an auxiliary secondary winding that is coupled magnetically with the secondary winding of the transformer in the first magnetic circuit;
(e) the transformer core further including a second magnetic circuit which includes a magnetic shunt and the primary winding but neither secondary winding, and in which the magnetic shunt comprises a portion of a different material having a higher magnetic reluctance than the material of the remainder of the first and second magnetic circuits; and
(f) means connected to the auxiliary secondary winding for signalling that the metal grid is live.

The device of the invention has the advantage that it can provide a reliable indication as to the operating condition of the grid: a clear distinction can be made between the grid when it is connected to the high voltage source and operating normally, and when it is not operating normally. Malfunctions of this kind can arise when a short circuit is formed, for example as a result of a fly becoming caught in contact with the grid. Other failures might result from, for example, failure of insulation in the secondary winding of the transformer, or of other insulating material associated with the metal grid, the secondary winding, or components by which they are connected to one another. Furthermore, the signalling means can provide an indication of other failures, for example in the power supply to the transformer, or in the primary winding.

The transformer is designed to provide suitable operating characteristics, for example in terms of appropriate voltages supplied to the metal grid and to the signalling means. The transformer is also designed to ensure that flux flows mainly through the second magnetic circuit in the event of the formation of a short circuit in the circuit which contains the metal grid, to ensure that the signalling means will then reveal that the metal grid is no longer functioning properly. Generally, the primary and secondary windings will be arranged to provide a high voltage supply in the region of 4.5 kV for the metal grid. The auxiliary winding can then be arranged to provide a voltage for the signalling means of about 150 to 200 V, which can be suitable as a supply for a neon discharge device.

Features are provided in the second magnetic circuit by which the magnetic flux is made to flow mainly in that circuit in the event of a short circuit as aforesaid. The second magnetic circuit includes a magnetic shunt comprising a portion of a material that is different from the material of the remainder of the second magnetic circuit and the first magnetic circuit. That material can conveniently be air.

The second magnetic circuit will be arranged so that power supplied from the auxiliary winding to the signalling means, when there is a short circuit in the circuit which includes the metal grid, is insufficient to cause the signalling means to show that the metal grid is functioning properly. For example, when the signalling means comprises a neon discharge device, the voltage that is supplied to the neon discharge device will be insufficient to cause it to strike.

The means for attracting insects to the device can comprise a radiation source, especially a source of ultraviolet radiation.

The present invention will now be described, by way of example only, with reference to the accompanying drawings, in which:
Figures 1a and 1b are schematic views, from the front and one end respectively, of an insect catching device;
Figure 2 is a circuit diagram; and
Figure 3 is a representation of the transformer in the circuit shown in Figure 2.

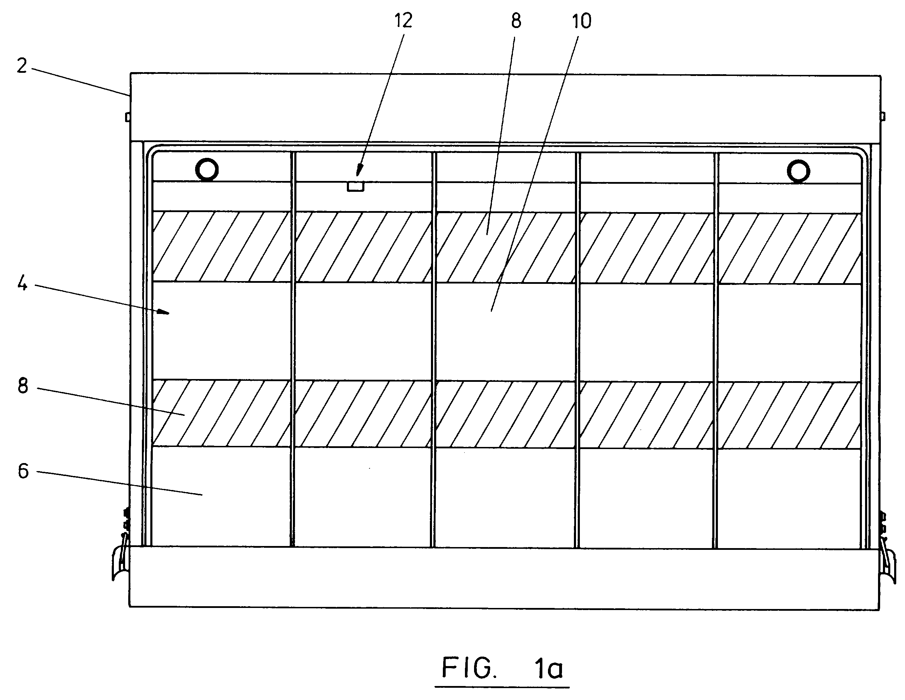

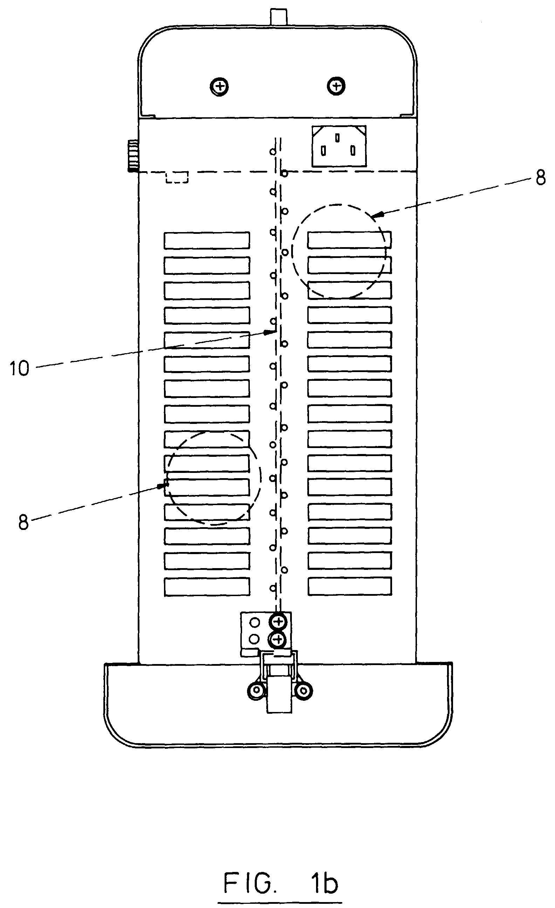

Referring to the drawings, Figure 1 shows an insect catching device which comprises a housing 2 formed from an appropriate metal. The housing has an inclined front face 4 in which an aperture 6 is formed. Two UV bulbs 8, emitting radiation with a wavelength of 360 nm, are provided within the housing, below the front face 4.

A metal grid 10 is provided in the housing. The grid is connected to a high voltage source.

The device includes a neon discharge device 12 provided in the housing. The discharge device provides an indication that the grid is at operating potential, and that there is no short circuit to earth.

In use, insects are attracted to the device by the UV radiation emitted by the bulbs 8. When they contact the metal grid, they close the circuit between the grid at high voltage and earth and are killed as a result.

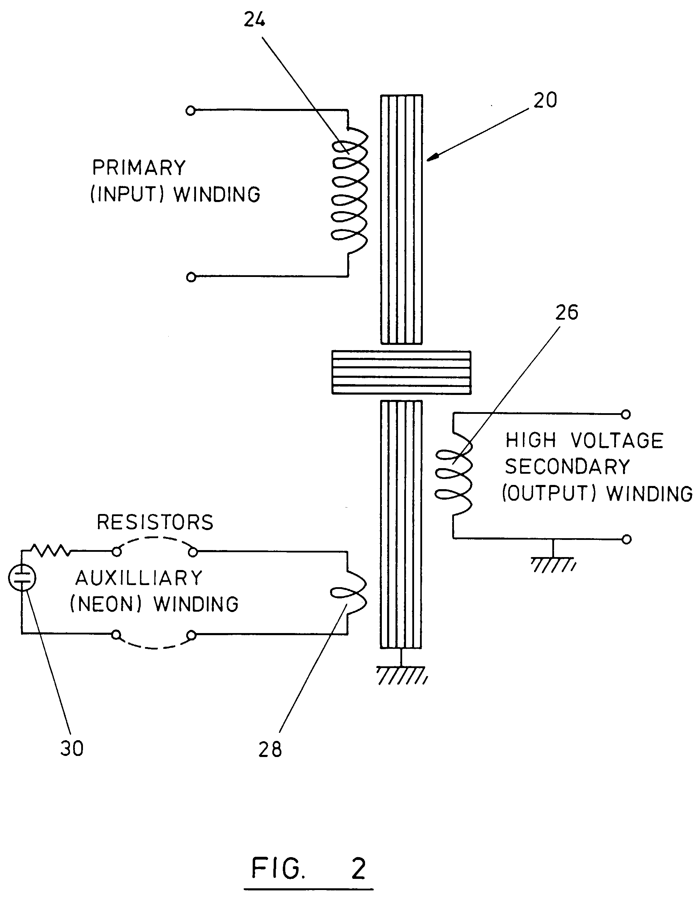

Figure 2 shows schematically a circuit which includes a transformer 20, having a core 22, a primary winding 24 that is connected to a power supply, a secondary winding 26 that is connected to the metal grid, and an auxiliary secondary winding 28 that is connected through resistors to a neon discharge device 30.

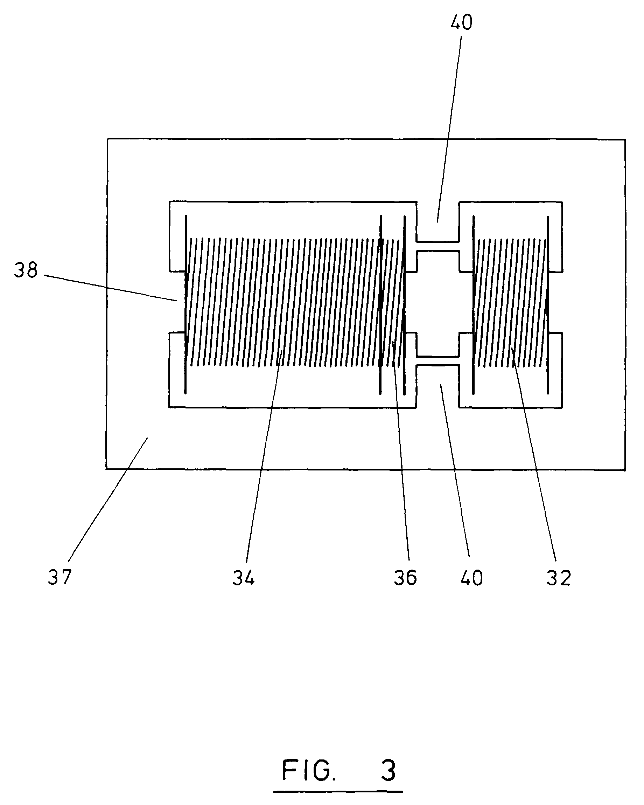

Figure 3 shows the transformer 20 in the circuit shown in Figure 2, with greater detail of the core. As illustrated, the transformer includes the primary winding 32, the secondary winding 34, and the auxiliary secondary winding 36. The core 37 of the transformer includes a central portion 38 on which all of the windings are mounted. The central portion extending through the three windings defines part of a first magnetic circuit.

The core defines a second magnetic circuit through arms 40 on the transformer. The second magnetic circuit includes air gaps.

The primary winding has about 2000 turns. The secondary winding has about 46000 turns. The auxiliary secondary winding has about 1500 turns. The cross-sectional area of the central portion 40 is about 325 mm². The air gaps measure about 2 mm in length.

## Claims

1. An insect killing device which comprises:
(a) means for attracting insects to the device;
(b) a metal grid;
(c) a high voltage source comprising a transformer of which a primary winding is for connection to a power supply and a secondary winding is connected to the metal grid, the transformer core comprising a first magnetic circuit which includes the primary and secondary windings;
(d) an auxiliary secondary winding that is coupled magnetically with the secondary winding of the transformer in the first magnetic circuit;
(e) the transformer core further including a second magnetic circuit which includes a magnetic shunt and the primary winding but neither secondary winding, and in which the magnetic shunt comprises a portion of a different material having a higher magnetic reluctance than the material of the remainder of the first and second magnetic circuits; and
(f) means connected to the auxiliary secondary winding for signalling that the metal grid is live.

2. A device as claimed in claim 1, in which the different material is air.

## Patentansprüche

1. Insekten tötendes Gerät, welches umfaßt:
a) Mittel zum Anziehen von Insekten zu dem Gerät;
b) ein Metallgitter;
c) eine Hochspannungsquelle, die einen Transformator umfaßt, bei dem eine primäre Wicklung zum Anschluß an ein Netzteil dient und eine sekundäre Wicklung an das Metallgitter angeschlossen ist, wobei der Transformatorkern einen ersten magnetischen Kreis umfaßt, welcher die primäre und sekundäre Wicklung einschließt;
d) eine sekundäre Hilfswicklung, die magnetisch mit der sekundären Wicklung des Transformators in dem ersten magnetischen Kreis gekoppelt ist;
e) wobei der Transformatorkern weiter einen zweiten magnetischen Kreis einschließt, der einen magnetischen Nebenfluß und die primären Wicklungen, aber keine der sekundären Wicklungen einschließt und in dem der magnetische Nebenfluß einen Abschnitt aus einem verschiedenen Material umfaßt, das eine höhere magnetische Reluktanz als das Material des Rests des ersten und zweiten magnetischen Kreises aufweist; und
f) Mittel die mit der sekundären Hilfswicklung verbunden sind und dazu dienen anzuzeigen, daß das Metallgitter spannungsführend ist.

2. Vorrichtung nach Anspruch 1, in der das unterschiedliche Material Luft ist.

## Revendications

1. Dispositif d'extermination des insectes qui comprend :
(a) des moyens pour attirer les insectes vers le dispositif ;
(b) une grille métallique ;
(c) une source de courant haute tension comprenant un transformateur dans lequel un enroulement primaire est destiné à être raccordé à une alimentation électrique et un enroulement secondaire est raccordé à la grille métallique, le noyau du transformateur comprenant un premier circuit magnétique qui comprend les enroulements primaire et secondaire ;
(d) un enroulement secondaire auxiliaire qui est couplé magnétiquement à l'enroulement secondaire du transformateur dans le premier circuit magnétique ;
(e) le noyau du transformateur comprenant en outre un second circuit magnétique qui comprend une dérivation magnétique et le premier enroulement et non pas l'enroulement secondaire, et dans lequel la dérivation magnétique comprend une partie en matière différente ayant une réluctance magnétique supérieure à celle de la matière constituant le reste des premier et second circuits magnétiques ; et
(f) des moyens raccordés à l'enroulement secondaire auxiliaire pour signaler que la grille métallique est sous tension.

2. Dispositif selon la revendication 1, dans lequel la matière différente est l'air.
